(19) Europäisches Patentamt

European Patent Office

Office européen des brevets

(11) **EP 1 076 039 B1**

(12) **EUROPÄISCHE PATENTSCHRIFT**

(45) Veröffentlichungstag und Bekanntmachung des Hinweises auf die Patenterteilung:
**29.12.2004 Patentblatt 2004/53**

(51) Int Cl.⁷: **C02F 1/46**, C02F 1/48

(21) Anmeldenummer: **00116353.4**

(22) Anmeldetag: **28.07.2000**

(54) **Gerät zur Wasserbehandlung mittel eines elektrischen Feldes**

Apparatus for treating water with an electrical field

Appareil pour le traitement de l'eau par un champ électrique

(84) Benannte Vertragsstaaten:
**AT BE CH CY DE DK ES FI FR GB GR IE IT LI LU MC NL PT SE**

(30) Priorität: **13.08.1999 DE 19938510**
**31.12.1999 DE 19963949**

(43) Veröffentlichungstag der Anmeldung:
**14.02.2001 Patentblatt 2001/07**

(73) Patentinhaber: HANS SASSERATH & CO KG
**41352 Korschenbroich (DE)**

(72) Erfinder: **Hecking, Willi**
**41238 Mönchengladbach (DE)**

(74) Vertreter: **Weisse, Jürgen, Dipl.-Phys. et al**
**Patentanwälte**
**Dipl.-Phys. Jürgen Weisse**
**Dipl.-Chem. Dr. Rudolf Wolgast**
**Bökenbusch 41**
**42555 Velbert-Langenberg (DE)**

(56) Entgegenhaltungen:
**EP-A- 1 002 765      DE-A- 19 541 234**
**US-A- 2 490 730      US-A- 4 341 617**

**Beschreibung**

Die Erfindung betrifft ein Gerät zur Wasserbehandlung mittels eines elektrischen Feldes mit jeweils einer in einer Behandlungskammer angeordneten Anode und Kathode, bei welcher die Kathode eine Vielzahl von parallelen langgestreckten Gliedern aufweist, an denen sich Impfkristalle bilden, und Mittel zum Ablösen dieser Impfkristalle vorgesehen sind.

Trinkwasser enthält wichtige Mineralien, unter anderem Kalzium- und Magnesiumkarbonate, die in der Summe auch als Wasserhärte bezeichnet werden. Diese Mineralien sind einerseits für die Gesundheit sehr wichtig. Sie können aber andererseits in der Trinkwasserinstallation, insbesondere bei Erwärmung, zu technischen Störungen führen.

Bei der Erwärmung, z.B. im Trinkwassererwärmer, kommt es zur Bildung von unlöslichen Kalkablagerungen, auch Kesselstein genannt. Dieser Kesselstein bildet sich auf der Warmseite der Installation. Er beeinträchtigt Wärmeübergänge. In Rohren kann Kesselstein über die Jahre zu einem Rohrinfarkt, d.h. zu einem Verschluß in der dem Trinkwassererwärmer nachgeschalteten Rohrinstallation führen.

Um solche Kalkablagerungen zu vermeiden, ist es bekannt, eine Enthärtung des Trinkwassers vorzunehmen, bei welcher die Mineralien aus dem Trinkwasser entfernt werden. Eine solche Enthärtung ist über Ionenaustausch oder Umkehrosmose möglich. Das vermeidet Kesselsteinbildung. Dafür wird aber in anderer Hinsicht die Qualität des Trinkwassers durch die Entfernung der an sich im Trinkwasser erwünschten Mineralien beeinträchtigt.

Es sind Verfahren zur Behandlung des Trinkwassers mittels sog. elektrophysikalischer Geräte bekannt, bei denen eine Kristallkeimbildung im Trinkwasser bewirkt werden soll. Die als Impfkristalle bezeichneten Kristallkeime werden im Trinkwasser mitgeführt. Die Konglomeration der Impfkristalle führt dann dazu, daß so behandeltes Trinkwasser weniger zu Ablagerungen in Rohren oder Heizelementen in Form von Kesselstein führt, während andererseits die Mineralien im Trinkwasser erhalten bleiben.

Die Behandlung mittels elektrophysikalischer Geräte erfolgt im wesentlichen nach folgendem Prinzip:

In Trinkwasser ist immer ein gewisser Teil Kohlendioxid ($CO_2$) gelöst. Dieses Kohlendioxid bildet mit den übrigen Bestandteilen ein Reaktionsgleichgewicht, wobei Kalziumhydrogenkarbonat $Ca(HCO_3)_2$ aus Kalziumkarbonat $CaCO_3$ gebildet wird nach der Reaktionsgleichung:

$$CaCO_3 + H_2O + CO_2 \Leftrightarrow Ca(HCO_3)_2$$

Wird das Wasser erhitzt, so entweicht $CO_2$ aus dem Wasser und es bildet sich Kesselstein. Man kann entsprechend der Gleichung aber auch gezielt das entsprechende Kalk-Kohlensäure-Gleichgewicht im Trinkwasser ändern.

Führt man dem Wasser Kohlensäure zu, so löst man eine Verschiebung des Gleichgewichts nach links in obiger Formel aus. Aus dem im Wasser vorliegenden Hydrogenkarbonat bilden sich Keime aus Kalziumkarbonat (Kalkübersättigung). Das weiter gebildete Kalziumkarbonat setzt sich dann vorzugsweise an den einmal entstandenen Keimen ab, d.h. die Keime "wachsen".

Diese Reaktion erfolgt in einer Behandlungskammer mit einer Kathode und einer Anode auf elektrolytischem Wege. Die Impfkristalle bilden sich an der Kathode. Die Impfkristalle müssen dann nach entsprechendem Wachstum wieder dem Trinkwasser beigemischt werden. Dann ist bereits Karbonat als Impfkristalle oder Keime im Trinkwasser vorhanden, wenn das Trinkwasser erhitzt wird. Die Impfkristalle oder Keime brauchen nicht mehr neu gebildet zu werden. Das Karbonat setzt sich dementsprechend vorwiegend an den im Wasser mitgeführten Impfkristallen oder Keimen und nicht mehr an den Installationselementen fest.

Es hat sich gezeigt, daß Impfkristalle sich in einem inhomogenen elektronischen Feld zwischen Kathode und Anode besser entwickeln können.

Aus der EP 0 751 096 A2 ist ein Gerät zur elektrophysikalischen Trinkwasserbehandlung mittels eines elektrischen Feldes bekannt, bei dem ein räumlich inhomoges Feld mit einer einer Gleichspannung überlagerten Wechselspannung erzeugt wird.

Bei einem weiteren bekannten Gerät werden an einer Edelstahlbürste, die als Kathode dient, Impfkristalle erzeugt, welche mittels eines mechanischen Abstreifers wieder gelöst werden. Dieser Abstreifer ist ein Kamm der durch die Edelstahlbürste geführt wird und eine Verformung der "Borsten" bewirkt.

Aufgabe der Erfindung ist es, ein Gerät zur elektrophysikalischen Behandlung von Trinkwasser zu schaffen, das einfach aufgebaut ist und eine hohe Wirksamkeit bezüglich der Keimbildung aufweist. Es ist weiterhin Aufgabe der Erfindung, die Kathode dauerhaft frei von Kalkablagerungen zu halten.

Erfindungsgemäß wird diese Aufgabe bei einem Gerät der eingangs genannten Art dadurch gelöst, daß *die langgestreckten Glieder von starren Stiften gebildet sind und die Mittel zum Ablösen der Impfkristalle von einer Lochscheibe gebildet sind, durch deren Löcher sich die Stifte erstrecken und die über diese Stifte geführt wird.*

Durch eine solche Lochscheibe lassen sich die an den *Stiften* gebildeten Impfkristalle sicher ablösen.

Bei einer bevorzugten Ausführung des Gerätes ist die Lochscheibe von einem elektrischen Stellmotor angetrieben. In einem Armaturenteil des Gerätes ist ein den Wasserdurchfluß beherrschendes Absperrventil angeordnet. Es sind weiterhin Überwachungsmittel zur Überwachung der hindurchfließenden Wassermenge nach vorgegebenen Sicherheitskriterien zur Vermeidung von Wasserschäden vorgesehen sind und das Absperrventil ist durch die Überwachungsmittel mit dem Stellmotor im Sinne eines Schließens des Absperrventils betätigbar, wenn die Überwachungsmittel ansprechen.

Bei dieser Lösung wird die Lochscheibe motorisch angetrieben über die Kathode geführt. Die Lochscheibe braucht nicht durch den Wasserdruck bewegt zu werden. Dadurch tritt keine Drosselung des Wasserstromes ein und es können größere Kräfte aufgebracht werden. Der hierfür erforderliche elektrische Stell- oder Antriebsmotor wird gleichzeitig benutzt, um ein Absperrventil in der Wasserleitung zu schließen, wenn, z.B. bei einem Wasserrohrbruch, ein ungewöhnlich hoher Wasserfluß oder, z.B. bei versehentlichem Offenlassen eines Zapfhahnes, ein Wasserfluß über eine ungewöhnlich lange Zeit auftritt. Mit einem Gerät und einem für verschiedene Zwecke einsetzbaren Stell- oder Antriebsmotor können somit verschiedene Funktionen erfüllt werden.

Die Lochscheibe kann über ein Getriebe mit einem von dem Stellmotor angetriebenen Nocken und einen Stößel gegen die Wirkung einer Rückstellfeder bewegbar sein.

Die Verwendung eines Stell- oder Antriebsmotors zur Bewegung der Lochscheibe macht es möglich, daß der Wasserstrom quer zur Richtung der Stifte zwischen den Stiften hindurchgeführt wird.

Weitere vorteilhafte konstruktive Einzelheiten sind Gegenstand der Unteransprüche 6 bis 11.

Eine bevorzugte Ausführung der Erfindung ist nachstehend unter Bezugnahme auf die zugehörigen Zeichnungen näher erläutert.

Fig.1     ist eine perspektivische Darstellung des Armaturenteils einer zweiten Ausführungsform eines Gerätes zur Wasserbehandlung und -überwachung.

Fig.2     ist eine perspektivische Darstellung des unteren Teils des Gerätes zur Wasserbehandlung und -überwachung mit der Behandlungskammer, teilweise im Schnitt.

Fig.3     ist eine Vorderansicht des Gerätes zur Wasserbehandlung und Wasserüberwachung.

Fig.4     ist eine Seitenansicht des Gerätes zur Wasserbehandlung und Wasserüberwachung.

Fig.5     zeigt einen Schnitt längs der Linie A - A von Fig. 3.

Fig.6     zeigt einen Schnitt längs der Linie C - C von Fig.3.

Fig.7     zeigt einen Schnitt längs der Linie D - D von Fig.4.

Fig.8     zeigt eine Einzelheit "X" in Fig.5.

Fig.9     ist eine perspektivische Darstellung des Armaturenteils.

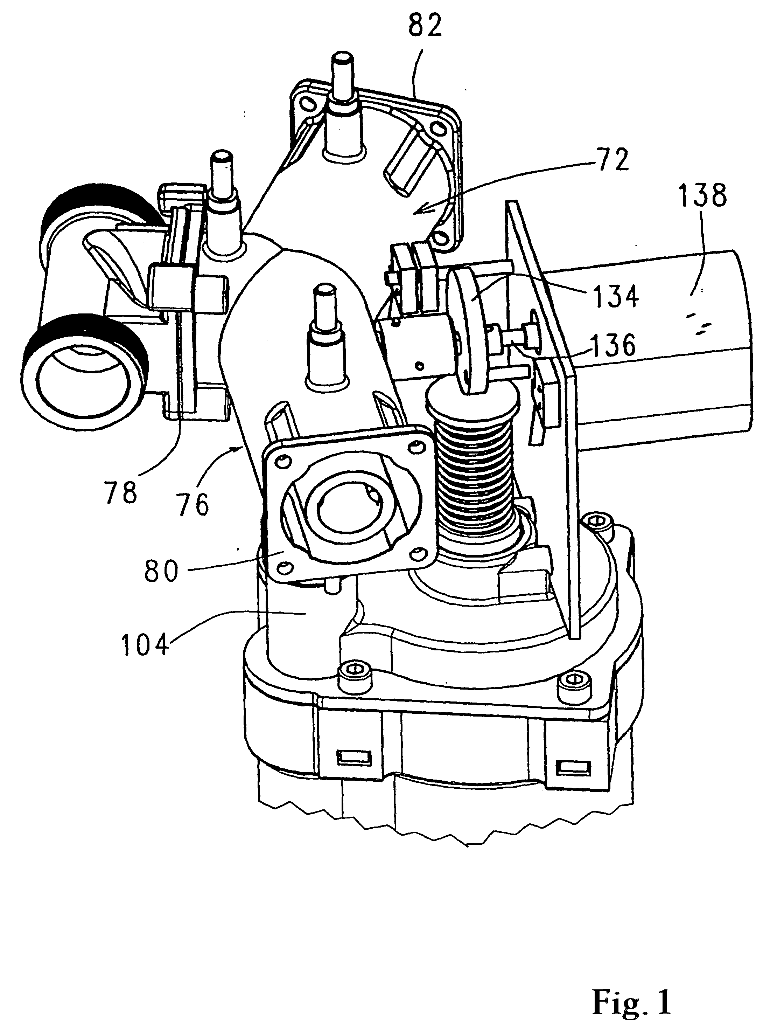

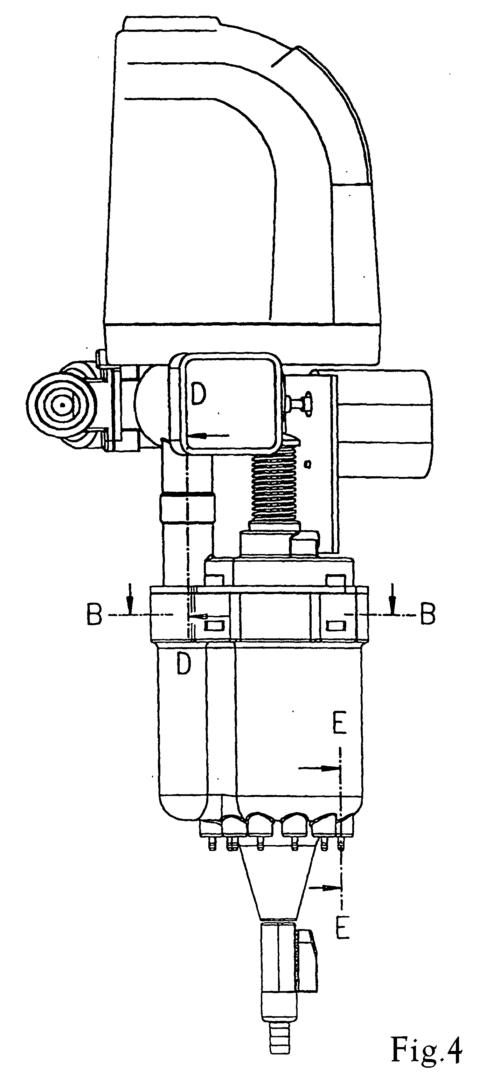

In den Figuren 1 bis 9 sind eine Mehrzahl von dymamischen Wasserbehandlungseinheiten 116 in der Behandlungskammer gleichachsig übereinander angeordnet. Jede Wasserbehandlungseinheit 116 besteht aus einer Anode 118 und einer Kathode 120. Die Kathode 120 besteht aus einer Ringscheibe mit einer Vielzahl von parallelen, axial vorstehenden Stiften 122. Die Stift 122 erstrecken sich durch entsprechend angeordnete Löcher einer Lochscheibe 124. Die Lochscheibe 124 hat Löcher, durch welche die Stifte hindurchragen. Die Kristallkeime werden abgestreift und dem Trinkwasser zugesetzt. Auf diese Weise können sie sich nicht permanent an der Kathode aufbauen. Durch das "Andokken" der Karbonate an den Kristallkeimen und das dadurch hervorgerufene Wachstum der Kristallkeime und durch das anschließende Abstreifen bleiben die Stifte auch nach langer Betriebsdauer frei von Kesselstein.

Die Anode 118 ist ein ringförmiges Sieb. Gewebeplatten von Aktivkohle sind auf der Vorderseite und der Rückseite mittels eines Klemmringes angeordnet. Die aus Aktivkohle bestehenden Gewebeplatten dienen zur Vergrößerung der Oberfläche der Anode, da Aktivkohle ein leitendes Material ist. Das Karbonat-Kohlendioxid-Gleichgewicht wird durch die Aktivkohle zur Bildung von Kristallkeimen ebenfalls geändert.

Eine gepulste Gleichspannung, d.h. eine Gleichspannung mit einem Rechteckverlauf oder irgend eine andere geeignete Spannung wird an Anode 118 und Kathode 120 angelegt.

Die Spannung wird mittels eines üblichen Strömungsmessers 114 gesteuert, d.h. die Behandlung erfolgt nur, wenn Trinkwasser hindurchfließt. Durch die Steuerung ist die elektrische Leistung an den Volumenstrom des Wasser anpaßbar. Durch Verwendung der strömungsabhängigen Steuerung kann das gepulste Gleichstromsignal hinsichtlich seiner Frequenz angepaßt werden. Durch die Änderung der elektrischen Gleichspannung hinsichtlich ihrer Frequenz kann die Erzeugung von Kristallkeimen gefördert werden. Das ist der Fall wegen des verstärkenden Einflusses des inhomogenen elektrischen Feldes.

Bei der bevorzugten Ausführung der Erfindung erfolgt die Verschiebung der Lochscheibe durch einen Stell- oder Antriebsmotor. Dieser Stell- oder Antrienbsmotor übernimmt gleichzeitig eine zweite Funktion, nämlich die Betätigung eines Absperrventils, das von einer Überwachungsvorrichtung gesteuert ist, die auf ungewöhnliche Strömungszustände, z.B. einen ungewöhnlich hohen Wasserdurchfluß (Wasserrohrbruch) oder ungewöhnlich langen Wasserdurchfluß (versehentliches Offenlassen eines Zapfhahnes) anspricht.

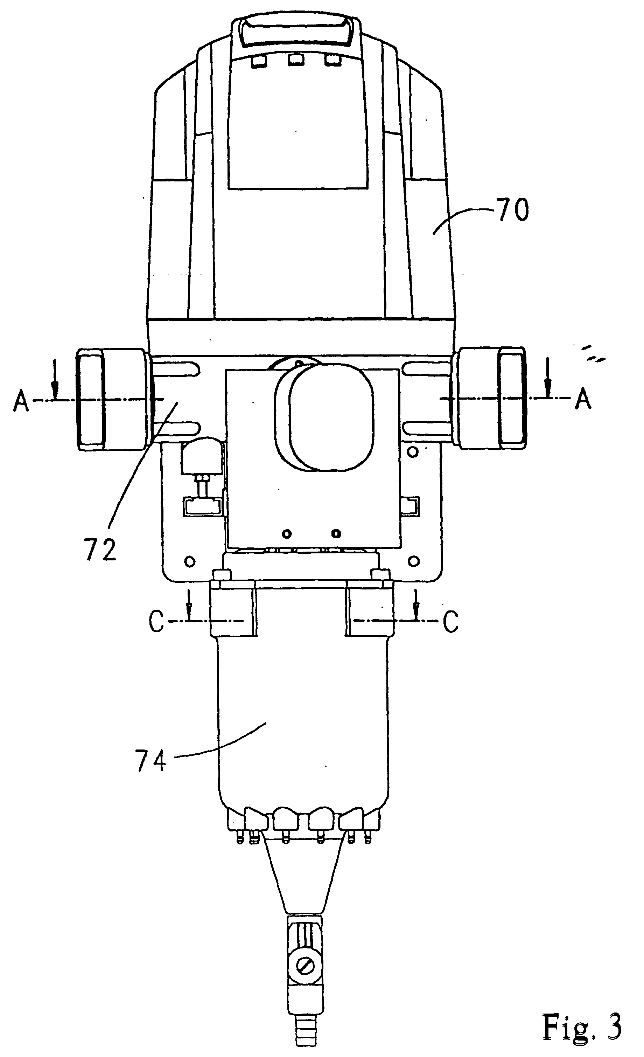

In Fig.3 ist mit 70 eine elektronische Überwachungseinrichtung als "Überwachungsmittel" zur Überwachung des Wasserflusses durch das Gerät bezeichnet. Die Überwachungseinrichtung spricht bei bestimmten Sicherheitskriterien an und betätigt ein Absperrventil, um Wasserschäden zu vermeiden. Ein solches Sicherheitskriterium kann darin bestehen, daß der Wasserfluß einen maximal zulässigen Wert überschreitet, was z.B. auf einen Wasserrohrbruch hindeutet. Das Sicherheitskriterium kann darin bestehen, daß eine kontinuierlich gezapfte Wassermenge einen zulässigen Wert überschreitet oder länger als eine vorgegebene, zulässige Zeit kontinuierlich Wasser gezapft wird. Das würde auf einen versehentlich offengelassenen Zapfhahn hindeuten. Solche Überwachungseinrichtungen sind an sich bekannt und daher hier nicht im einzelnen beschrieben. Die Überwachungseinrichtung 70 sitzt auf einem Armaturenteil 72 des Gerätes. Unter dem Armaturenteil 72 sitzt eine Behandlungskammer 74. In der Behandlungskammer 74 erfolgt eine "dynamische Behandlung" des durchfließenden Wassers mittels elektrischer Felder. Durch diese Behandlung werden Kristallisationskerne gebildet, die im Wasser mitgeführt werden. An diesen Kristallisationskernen kristallisiert sich der im Wasser gelöste Kalk so an, daß er in Form von kleinen Kalkkristallen vom Wasser mitgeführt wird und sich nicht an den Wandungen absetzt und zur Verkalkung führt.

In Fig.1 ist der Armaturenteil 72 perspektivisch dargestellt. Der Armaturenteil 72 weist einen Y-förmigen Kanalkörper 76 auf. Der Kanalkörper 76 bildet drei Anschlußstutzen 78, 80 und 82. Der erste Anschlußstutzen 78 des Kanalkörpers 76 bildet zwei zueinander koaxiale Kanäle, einen inneren Kanal 84 und einen diesen Kanal 84 mantelförmig umgebenden äußeren Kanal 86. Der zweite Anschlußstutzen 80 bildet ebenfalls zwei zueinander koaxiale Kanäle, einen inneren Kanal 88 und einen diesen Kanal 88 mantelförmig umgebenden äußeren Kanal 90. Der dritte Anschlußstutzen 82 bildet ebenfalls zwei zueinander koaxiale Kanäle, einen inneren Kanal 92 und einen diesen Kanal 92 mantelförmig umgebenden äußeren Kanal 94. Der innere Kanal 84 des ersten Anschlußstutzens 78 ist mit dem inneren Kanal 88 des zweiten Anschlußstutzens 80 verbunden. Der äußere Kanal 86 des ersten Anschlußstutzens 78 ist mit dem äußeren Kanal 94 des dritten Anschlußstutzens 82 verbunden.

Mit 96 ist ein T-Stück bezeichnet, das mit zwei fluchtenden Anschlüssen 98 und 100 in eine Wasserleitung eingebaut ist. Senkrecht zur Achse der beiden Anschlüsse 98 und 100 ist ein T-Stück-Anschlußstutzen 102 mit zwei zueinander koaxialen Kanälen, einem inneren Kanal und einem diesen inneren Kanal mantelförmig umgebenden äußeren Kanal. Der innere Kanal des T-Stück-Anschlußstutzens 102 ist mit dem Anschluß 98 verbunden. Der äußere Kanal des T-Stück-Anschlußstutzens 102 ist mit dem Anschluß 100 verbunden. Der T-Stück-Anschlußstutzen 102 ist mit dem ersten Anschlußstutzen 78 des Y-förmigen Kanalkörpers 76 verbunden.

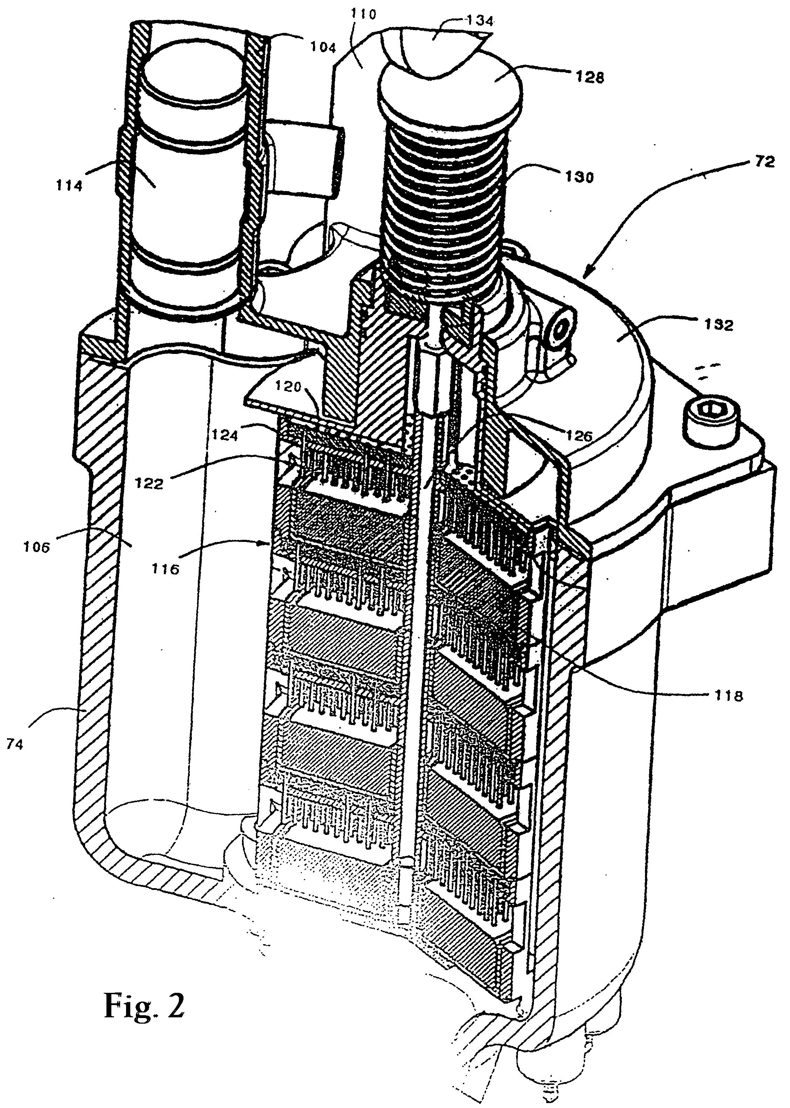

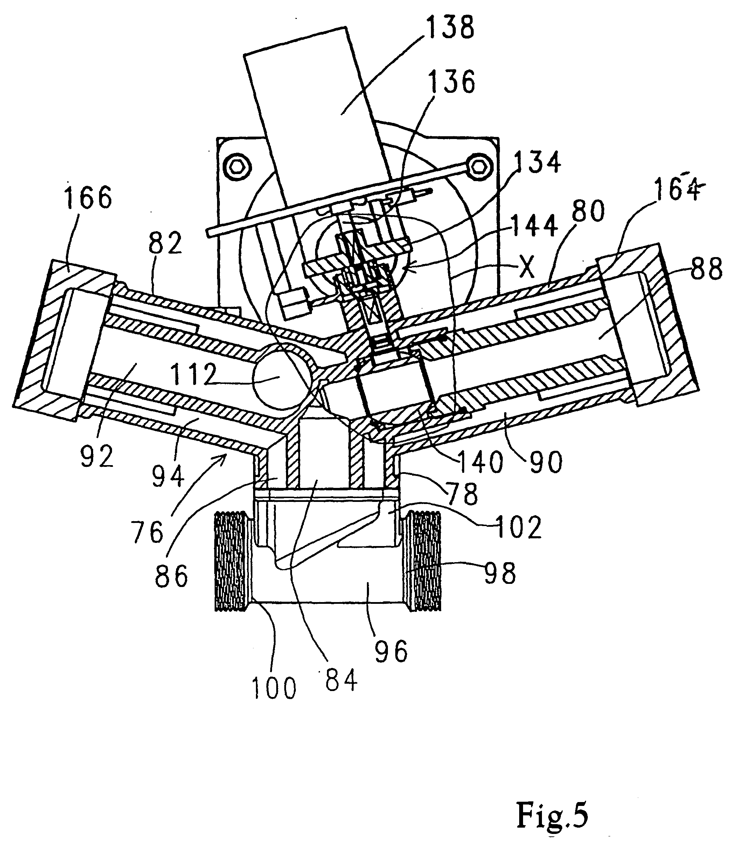

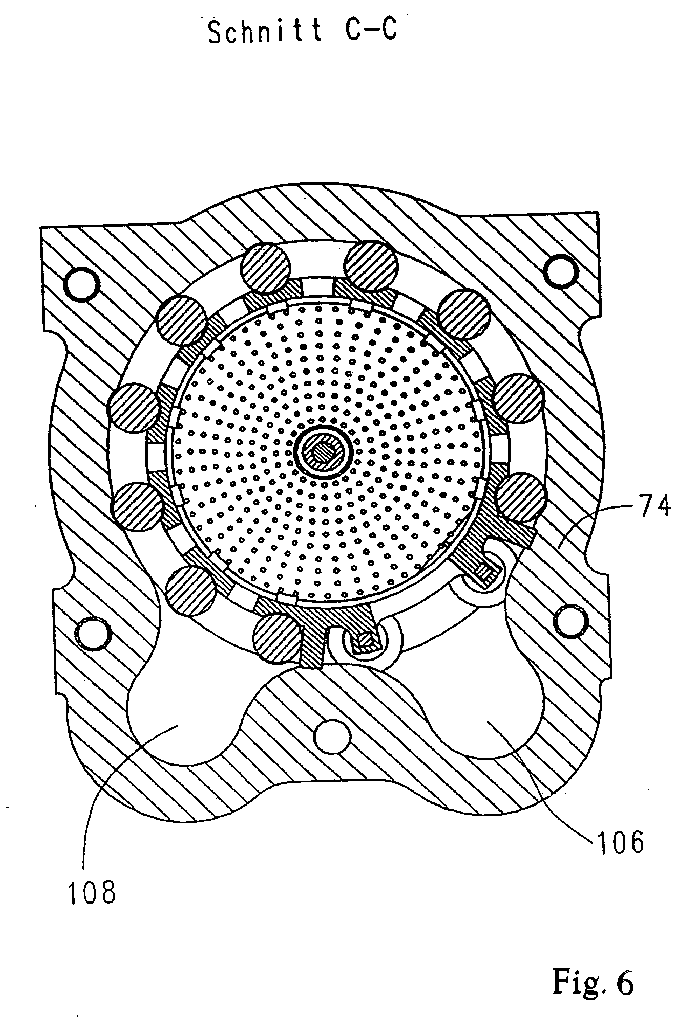

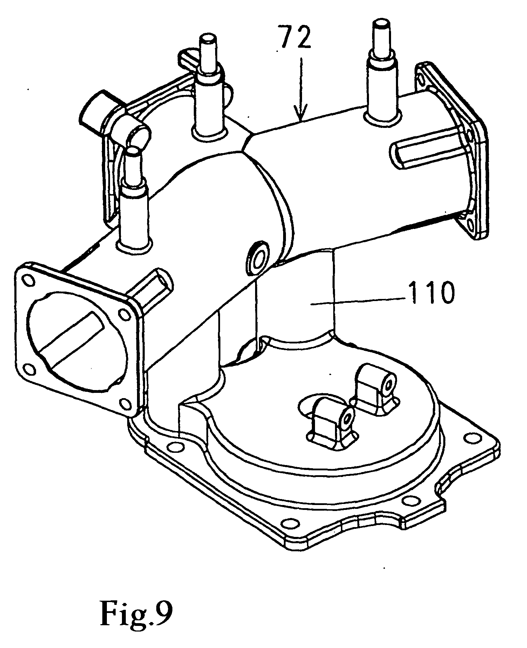

Von dem äußeren Kanal 90 des zweiten Anschlußstutzens 80 geht ein Rohrstutzen 104 nach unten in Fig.1 ab. Die Mündung dieses Rohrstutzens 104 ist in Fig.5 durch die Wandung des inneren Kanals 88 verdeckt. Dieser Rohrstutzen 104 endet in einem Einlaß 106 der Behandlungskammer 74 (Fig.2 und 6). Ein Auslaß 108 der Behandlungskammer 104 ist über einen Rohrstutzen 110 (Fig.9) mit dem Armaturenteil 72 verbunden. Die Bohrung 112 des Rohrstutzens 110 mündet in den inneren Kanal 92 des dritten Anschlußstutzens 82 des Kanalkörpers 76, wie in Fig.5 erkennbar ist.

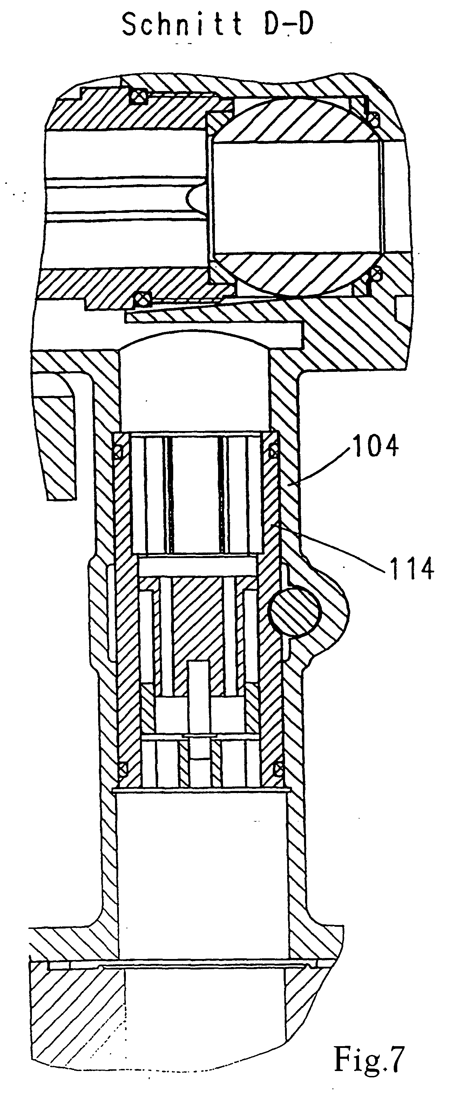

Wie aus Fig.2 und 7 ersichtlich ist, sitzt in dem Rohrstutzen 104 ein elektronischer Strömungsmesser 114. Solche elektronischen Strömungsmesser sind an sich bekannt. Der Strömungsmesser 114 ist daher hier nicht im einzelnen beschrieben. Der Strömungsmesser 114 liefert einmal ein Signal nach Maßgabe des Wasserflusses an die Überwachungseinrichtung 70. Zum anderen ist das Signal auf eine (nicht dargestellte) Schalteinrichtung geschaltet, welche die Elektroden in der Behandlungskammer 74 erst an Spannung legt, wenn der Strömungsmesser 114 einen Wasserstrom oberhalb eines vorgegebenen Schwellwertes -der auch null sein kann- signalisiert.

In der Behandlungskammer 74 sitzen gleichachsig übereinander eine Mehrzahl von dynamischen Wasserbehandlungs-Einheiten 116. Jede Wasserbehandlungs-Einheit 116 besteht aus einer Anode 118 und einer Kathode 120. Die Kathode 120 besteht aus einer Ringscheibe mit einer Vielzahl von parallelen, axial sich erstreckenden Stiften 122. Die Stifte 122 ragen durch entsprechend angeordnete Löcher einer Lochscheibe 124.. Die Lochscheiben 124 aller Wasserbehandlungs-Einheiten sind miteinander und mit einem Stößel 126 verbunden. Der Stößel 126 endet in einem Teller 128. Der Teller 128 steht unter dem Einfluß einer als Schraubenfeder ausgebildeten Druckfeder 130. Die Druckfeder 130 stützt sich an einer Grundplatte 132 des Armaturenteils 72 ab, die den Deckel der Behandlungskammer 74 bildet. Durch einen Nocken 134 ist der Stößel gegen die Wirkung der Druckfeder 130 nach unten in Fig.2 bewegbar. Dabei gleiten die Lochscheiben auf den Stiften 122 und lösen Kristallkeime ab, die sich infolge eines zwischen Kathode und Anode wirkenden, inhomogenen elektrischen Feldes an der Kathode gebildet haben. Diese Kristallkeime werden vom Wasserstrom mitgenommen. Auf dem Weg von Einlaß 106 zu Auslaß 108 fließt der Wasserstrom im wesentlichen quer zu den Stiften zwischen diesen hindurch und jeweils zwischen Anode und Kathode.

Damit ergibt sich ein relativ langer Weg durch das inhomogene elektrische Feld und damit eine relativ lange Verweildauer in diesem Feld. Außerdem ist der Druckabfall zwischen Einlaß 106 und Auslaß 108 der Behandlungskammer 74 gering.

Wie aus Fig.1 ersichtlich ist, sitzt der Nocken 134 auf der Welle 136 eines elektrischen Stell- oder Antriebsmotors 138. Durch den Stell- oder Antriebsmotor 138 werden über den Nocken 134 und den Stößel 126 (Fig.2) die Lochscheiben 124 periodisch nach unten über die Stifte 122 bewegt.

Der Stell- oder Antriebsmotor 138 hat jedoch noch eine zweite Funktion:

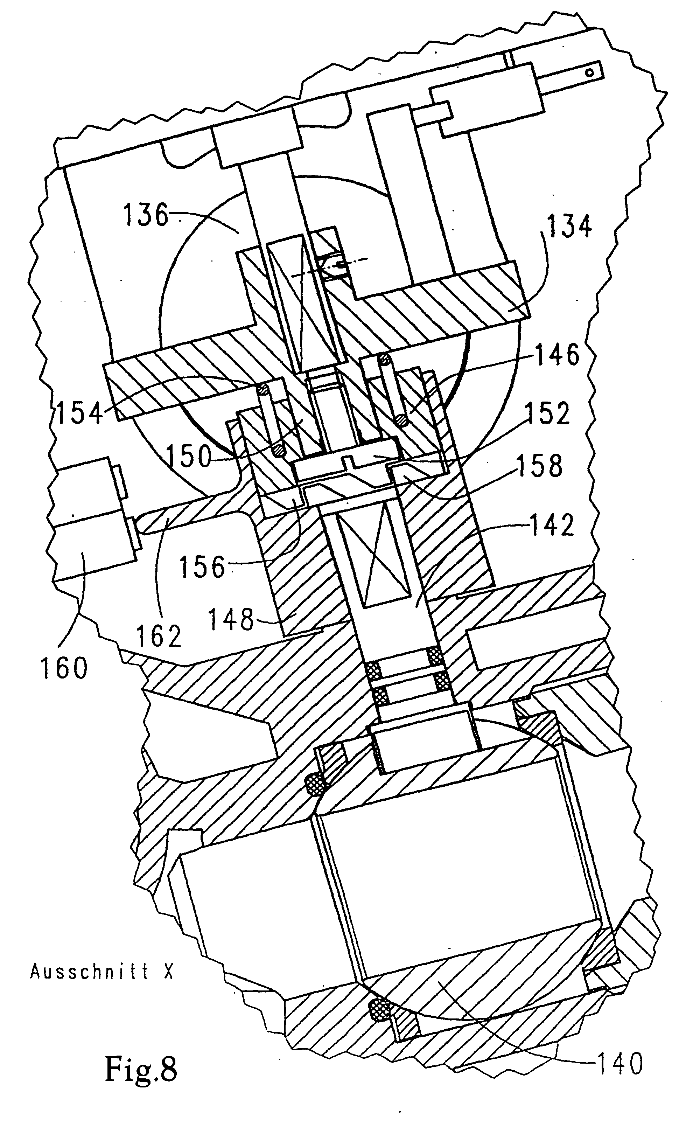

Wie am besten aus Fig.5 ersichtlich ist, sitzt in dem inneren Kanal 88 des zweiten Anschlußstutzens 80 des Kanalkörpers 76 ein als Kugelventil ausgebildetes Absperrventil 140. Das Absperrventil 140 ist in Fig. 5 in seiner Offenstellung gezeigt. Es kann durch Drehung der Ventilkugel um 90° um die Achse des Stelloder Antriebsmotors 138 in seine Schließstellung gebracht werden. Die Ventilkugel des Absperrventil 140 ist über einen Kugelhahntrieb 142 verdrehbar. Der Kugelhahntrieb 142 ist mit dem Nocken 134 und damit der Welle 136 des Motors 138 über eine Kupplung 144 gekuppelt. Wie am besten aus Fig.8 ersichtlich ist, weist die Kupplung 144 eine antriebseitige Kupplungshälfte 146 und eine abtriebseitige Kupplungshälfte 148 auf. Die antriebseitige Kupplungshälfte 146 ist auf einem Vielkant 150 des Nockens 134 zwischen dem Nocken 134 und einem Anschlag 152 verschiebbar geführt. Die antriebseitige Kupplungshälfte 146 steht unter dem Einfluß einer Feder 154, welche sich an dem Nocken 134 abstützt und die Kupplungshälfte von dem Nocken 134 weg in eine Einrückstellung zu drücken sucht. Die abtriebseitige Kupplungshälfte 148 sitzt undrehbar auf dem Kugelhahntrieb 142. Die Kupplungshälften 146 und 148 sind über Zähne 156 und 158 miteinander in Eingriff, die bei einer Drehrichtung über Schrägflächen und bei der entgegengesetzten Drehrichtung über achsparallele Radialflächen aneinander zur Anlage kommen. Bei einer Drehrichtung des Stell- oder Antriebsmotors 138 wird die Kupplungshälfte 146 über die Schrägflächen gegen die Wirkung der Feder 154 ausgerückt. In dieser Drehrichtung überträgt der Stell- oder Antriebsmotor 138 keine Drehbewegung auf die Ventilkugel des Absperrventils 140. Bei der entgegengesetzten Drehrichtung kommen die achsparallelen Radialflächen der Zähne 156 und 158 aneinander zur Anlage. Dadurch wird die abtriebseitige Kupplungshälfte 148 mitgenommen. Das Absperrventil wird in seine Schließstellung gefahren. Die Drehbewegung wird mittels eines Mikroschalters 160 begrenzt, der von einem Nocken 162 an der abtriebseitigen Kupplungshälfte 148 betätigbar ist.

In dem dargestellten Zustand sind der zweite und der dritte Anschlußstutzen 80 bzw. 82 des Kanalkörpers 76 durch Kappen 164 bzw. 166 abgeschlossen. Die Kappen 164 und 166 gestatten einen Durchgang des Wasserstromes von dem inneren Kanal 88 bzw. 92 zu dem äußeren Kanal 80 bzw. 44 der Anschlußstutzen 80 bzw.82.

Das beschriebene Gerät arbeitet wie folgt:

Aus der Wasserleitung strömt das Wasser über den inneren Kanal des T-Stück-Anschlußstutzens 102 in den inneren Kanal 84 des ersten Anschlußstutzens 78 des Kanalkörpers 76. Von dort gelangt das Wasser in den inneren Kanal 88 des zweiten Anschlußstutzens 80. Durch die Kappe wird der Wasserfluß dann in den äußeren Kanal 90 des zweiten Anschlußstutzens 80 umgeleitet. Der Wasserfluß gelangt über den Rohrstutzen 104 zum Einlaß 106 der Behandlungskammer 74. Das Wasser strömt unter Bildung von Kristallisationskeimen durch die Wasserbehandlungs-Einheiten 116 zum Auslaß 108 der Behandlungskammer 74. Durch den Rohrstutzen 110 (Fig.9) gelangt der Wasserfluß in den inneren Kanal 92 des dritten Anschlußstutzens. Durch die Kappe 166 wird auch hier der Wasserfluß in den äußeren Kanal 94 des dritten Anschlußstutzens 82 umgelenkt. Der Wasserfluß gelangt dann über den äußeren Kanal 86 des ersten Anschlußstutzens 78 in den äußeren Kanal des T-Stück-Anschlußstutzens 102 und zum Auslaß 100, der wieder in die Wasserleitung eingebaut ist.

Bei einer Drehrichtung des Stell- oder Antriebsmotors 138 werden über den Nocken 134 die Lochscheiben 124 auf den Stiften 162 hin- und herbewegt. Das ist der normale Betrieb.

Wenn die Überwachungsvorrichtung 70 anspricht, steuert sie die Drehrichtung des Stell- oder Antriebsmotors 138 um. Dann verdreht der Stell- oder Antriebsmotor 138 die Ventilkugel des Absperrventils 140, bis der Stell- oder Antriebsmotor 138 über den Mikroschalter 160 nach 90° Drehung stillgesetzt oder wieder umgesteuert wird.

Bei dem beschriebenen Gerät wird nicht nur der Stell- oder Antriebsmotor 138 für verschiedene Funktionen für die Wasserbehandlung und die Überwachung ausgenutzt. Auch der Stömungsmesser 114 erfüllt verschiedene Funktionen, nämlich einmal für die Ein- und Ausschaltung der Spannung bei der Wasserbehandlung und zum anderen bei der Überwachung von ungewöhnlichen Wasserstrom-Zuständen. Die Drehzahl des Stell- oder Antriebsmotors 138 wird im Normalbetrieb bei der Wasserbehandlung in Abhängigkeit von dem Strömungssignal des Strömungsmessers 114 derart verändert, daß bei Erhöhung des Wasserflusses auch die Drehzahl des Stell- oder Antriebsmotors 138 erhöht wird. Bei erhöhtem Wasserdurchfluß wird damit auch die Geschwindigkeit der Ablösemittel, nämlich der Lochscheiben 124, erhöht.

Nach dem Abschrauben der Kappe 164 von dem zweiten Anschlußstutzen 80 des Kanalkörpers 76 kann an den zweiten Anschlußstutzen eine mit einem entsprechenden Anschlußstutzen mit koaxialen Kanälen versehene Druckminderer-Filter-Kombination angeschlossen werden. In entsprechender Weise können an den dritten Anschlußstutzen 82 nach Abschrauben der Kappe 166 weitere Geräte zur Wasserbehandlung wie Aktivkohlefilter angeschlossen werden. Die auf diese Weise an die Anschlußstutzen 80 und 82 angeschlossenen Geräte sind mit dem hier beschriebenen Gerät zur physikalischen Wasserbehandlung strömungsmäßig in Reihe geschaltet, ohne daß hierfür zusätzliche T-Stücke wie T-Stück 96 in die Wasserleitung eingebaut zu werden brauchen.

**Patentansprüche**

1. Gerät zur Wasserbehandlung mittels eines elektrischen Feldes mit jeweils einer in einer Behandlungskammer (74) angeordneten Anode (118) und Kathode (120), bei welcher die Kathode (120) eine Vielzahl von parallelen langgestreckten Gliedern (122) aufweist, an denen sich Impfkristalle bilden, und Mittel zum Ablösen dieser Impfkristalle vorgesehen sind **dadurch gekennzeichnet, daß** die langgestreckten Glieder von starren Stiften (122) gebildet sind und die Mittel zum Ablösen der Impfkristalle von einer Lochscheibe (124) gebildet sind, durch deren Löcher sich die Stifte (122) erstrecken und die über diese Stifte (122) geführt wird.

2. Gerät nach Anspruch 1, **dadurch gekennzeichnet, daß**

   (a) die Lochscheibe (124) von einem elektrischen Stellmotor (138) angetrieben ist,

   (b) in einem Armaturenteil (72) des Gerätes ein den Wasserdurchfluß beherrschendes Absperrventil (140) angeordnet ist,

   (c) Überwachungsmittel (70) zur Überwachung der hindurchfließenden Wassermenge nach vorgegebenen Sicherheitskriterien zur Vermeidung von Wasserschäden vorgesehen sind und

   (d) das Absperrventil (140) durch die Überwachungsmittel (70) mit dem Stellmotor (138) im Sinne eines Schließens des Absperrventils (140) betätigbar ist, wenn die Überwachungsmittel (70) ansprechen.

3. Gerät nach Anspruch 2, **dadurch gekennzeichnet, daß** die Lochscheibe (124) über ein Getriebe mit einem von dem Stellmotor (138) angetriebenen Nocken (134) und einen Stößel (126) gegen die Wirkung einer Rückstellfeder (130) bewegbar ist.

4. Gerät nach einem der Ansprüche 1bis 3 **dadurch gekennzeichnet, daß** der Wasserstrom quer zur Richtung der Stifte (122) zwischen den Stiften (122) hindurchgeführt wird.

5. Gerät nach einem der Ansprüche 2bis 6 **dadurch gekennzeichnet, daß**

   (a) der Stellmotor (138) zum Antrieb der Ablösemittel (124) in einer ersten Drehrichtung antreibbar ist und mit dem Absperrventil (140) über eine Kupplung (144) verbunden ist, die nur in einer der ersten Drehrichtung entgegengesetzten zweiten Drehrichtung mitnimmt, und

   (b) der Stellmotor (138) beim Ansprechen der Überwachungsmittel (70) aus der ersten in die zweite Drehrichtung umsteuerbar ist.

6. Gerät nach einem der Ansprüche 2bis 5 **dadurch gekennzeichnet, daß**

   (a) ein Armaturenteil (72) des Gerätes einen Y-förmigen Kanalkörper (76) mit drei Anschlußstutzen (78,80,82) aufweist, die je zwei zueinander koaxiale Kanäle (84,86;88,90; 92,94) bilden,

   (b) ein erster Anschlußstutzen (98) zum Anschluß an einen mit entsprechend koaxialen Kanälen versehenen T-Stück-Anschlußstutzen (102) eines in eine Wasserleitung einbaubaren T-Stücks (96) eingerichtet ist, wobei der Innenkanal des T-Stück-Anschlußstutzens (102) mit dem einen T-Stück-Anschluß (98) und der Außenkanal des T-Stück-Anschlußstutzens (102) mit dem anderen T-Stück-Anschluß (100) verbunden ist,

   (c) der Außenkanal (90) eines zweiten Anschlußstutzens (80) des Kanalkörpers (76) mit einem Einlaß (106) der Behandlungskammer (74) und

   (d) der Innenkanal (92) eines dritten Anschlußstutzens (82) des Kanalkörpers (76) mit einem Auslaß (108) der Behandlungskammer (74) verbunden ist und

   (e) der Innenkanal (92) der zweiten Anschlußstutzens (80) mit dem Innenkanal (84) des ersten Anschlußstutzens (78) und

   (f) der Außenkanal (94) des dritten Anschlußstutzens (82) mit dem Außenkanal (86) des ersten Anschlußstutzens (78) in Verbindung steht.

7. Gerät nach Anspruch 6 **dadurch gekennzeichnet, daß** das Absperrventil (140) den Innenkanal (88) des zweiten Anschlußstutzens (80) des Kanalkörpers (76) beherrscht.

8. Gerät nach Anspruch 7 **dadurch gekennzeichnet, daß** das Absperrventil (140) ein Kugelventil ist.

9. Gerät nach einem der Ansprüche 2bis 8 **dadurch gekennzeichnet, daß**

(a) im Strömungsweg des Gerätes ein Strömungsmesser (114) angeordnet ist, der einen Strömungsmeßwert für den durch das Gerät hindurchfließenden Wasserstrom liefert,

(b) der Strömungsmeßwert des Strömungsmessers (114) einerseits auf die Überwachungsvorrichtung (70) aufgeschaltet ist zur Prüfung, ob eines der Sicherheitskriterien erfüllt ist, die ein Ansprechender Überwachungsvorrichtung (70) zum Schließen des Absperrventils (140) auslösen, und

(c) durch den Strömungsmeßwert des gleichen Strömungsmessers (114) andererseits Schaltmittel ansteuerbar sind, durch welche nur bei Auftreten eines Wasserstromes eine Spannung zwischen die Anoden (118) und Kathoden (120) in der Behandlungskammer (74) anlegbar sind.

**10.** Gerät nach Anspruch 9 **dadurch gekennzeichnet, daß** die Drehzahl des Stellmotors (138) im Normalbetrieb in Abhängigkeit von dem Strömungsmeßwert veränderbar ist, so daß bei Erhöhung des Wasserstromes die Geschwindigkeit der Ablösemittel (124) erhöht wird.

## Claims

**1.** Device for water treatment by means of an electrical field having an anode (118) and a cathode (120) arranged in a treatment chamber (74), the cathode (120) having a plurality of parallel longitudinal members (122), at which seed crystals are formed, and means for removing these seed crystals are provided, **characterized in that** the longitudinal members are formed by rigid pins (122) and the means for removing the seed crystals are formed by a hole disc (124), the pins (122) extending trough these holes and which hole disc (124) is guided over these pins (122).

**2.** Device as set forth in claim 1, **characterized in that**

(a) the hole disc (124) is driven by an electrical servomotor (138),

(b) a shut-off valve (140) controlling the water passage is arranged in a sitting part (72) of the device,

(c) controlling means (70) are provided for controlling the passing water quantity in accordance with predetermined security criteria for preventing water damages, and

(d) the shut-off valve (140) is arranged to be actuated by the controlling means (70) with the servomotor (138) in the sense of closing the shut-off valve (140) when the controlling means (70) respond.

**3.** Device as set forth in claim 2, **characterized in that** the hole disc (124) is movable through a transmission having a cam (134) driven by the servomotor (138) and a tappet (126) against the action of a pull-back spring (130).

**4.** Device as set forth in one of the claims 1 to 3, **characterized in that** the water flow is passed between the pins (122) transversally to the direction of the pins (122).

**5.** Device as set forth in one of the claims 2 to 6, **characterized in that**

(a) the servomotor (138) for driving the releasing means (124) is arranged to be driven in a first direction of rotation and is connected to the shut-off valve (140) through a coupling (144), which catches only in a second direction of rotation opposite to the first direction of rotation, and

(b) the servomotor (138) is arranged to be switched-over from the first to the second direction of rotation when the controlling means (70) respond.

**6.** Device as set forth in one of the claims 2 to 5, **characterized in that**

(a) a sitting part (72) of the device has a Y-shaped passage body (76) having three port sockets (78,80,82), forming two mutually coaxial passages (84,86;88,90;92,94),

(b) a first port socket (98) adapted to be connected to a T-piece port socket (102) of a T-piece (96) arranged to be inserted in a water conduit, the T-piece port socket (102) being provided with correspondingly coaxial passages, the inner passage of the T-piece port socket (102) communicating with one of the T-piece port (98) and the outer passage of the T-piece port socket (102) communicating with the other T-piece port (100),

(c) the outer passage (90) of a second port socket (80) of the passage body (76) communicates with an inlet (106) of the treatment chamber (74),

(d) the inner passage (92) of a third port socket (82) of the passage body (76) communicates with an outlet (108) of the treatment chamber (74),

(e) the inner passage (92) of the second port socket (80) communicates with the inner passage (84) of the first port socket (78), and

(f) the outer passage (94) of the third port socket (82) communicates with the outer passage (86) of the first port socket (78).

**7.** Device as set forth in claim 6, **characterized in that** the shut-off valve (140) controls the inner passage (88) of the second port socket (80) of the passage body (76).

**8.** Device as set forth in claim 7, **characterized in that** the shut-off valve (140) is a ball valve.

**9.** Device as set forth in one of the claims 2 to 8, **characterized in that**

(a) a flow meter (114) is arranged in the flow path of the device and supplies a flow measuring value for the water flow passing through the device,

(b) on one hand, the flow measuring value of the flow meter (114) is applied to the controlling device (70) for controlling whether it complies with one of the security criteria or not, which security criteria trigger the controlling device to respond for closing the shut-off valve (140), and

(c) on the other hand, switching means are arranged to be actuated by the flow measuring value of the same flow meter (114), through which switching means a voltage between the anodes (118) and cathodes (120) in the treatment chamber (120) is adapted to be applied only when a water flow exists.

**10.** Device as set forth in claim 9, **characterized in that** the rotary speed of the servomotor (138) is adapted to be modified in normal operation as a function of the flow measuring value, such that the speed of the releasing means (124) is increased when the water flow increases.

**Revendications**

**1.** Appareil pour le traitement de l'eau au moyen d'un champ électrique présentant à chaque fois une anode (118) et une cathode (120) disposées dans une chambre de traitement (74) pour laquelle la cathode (120) présente plusieurs organes (122) allongés parallèles sur lesquels se forment des cristaux, et pour laquelle sont prévus des moyens pour détacher ces cristaux, **caractérisé en ce que** les organes allongés sont formés par des broches rigides (122) et les moyens pour détacher les cristaux sont formés par un disque percé (124) dont les trous sont traversés par les broches (122) et qui est guidé le long de ces broches (122).

**2.** Appareil selon la revendication 1, **caractérisé en ce que**

(a) le disque percé (124) est entraîné par un servomoteur électrique (138),
(b) une vanne d'arrêt (140) maîtrisant le passage de l'eau est disposée à l'intérieur d'un élément de robinetterie (72) de l'appareil,
(c) des moyens de contrôle (70) pour le contrôle du débit d'eau traversant l'appareil d'après des critères de sécurité prédéfinis afin d'éviter tout dégât des eaux et
(d) la vanne d'arrêt (140) peut être actionnée par les moyens de contrôle (70) à l'aide du servomoteur (138) en vue de la fermeture de la vanne d'arrêt (140) lorsque les moyens de contrôle (70) se déclenchent.

**3.** Appareil selon la revendication 2, **caractérisé en ce que** le disque percé (124) peut se déplacer par un système de transmission à came (134) entraînée par le servomoteur (138) et par un poussoir (126) agissant contre l'action d'un ressort de rappel (130).

**4.** Appareil selon l'une quelconque des revendications 1 à 3, **caractérisé en ce que** le courant d'eau est guidé entre les broches (122) diagonalement par rapport au sens des broches (122).

**5.** Appareil selon l'une quelconque des revendications 2 à 6, **caractérisé en ce que**

(a) le servomoteur (138) pour l'entraînement des moyens de détachement (124) peut être entraîné dans un premier sens de rotation et est relié à la vanne d'arrêt (140) par l'intermédiaire d'un accouplement (144) dont le sens d'entraînement est uniquement le second sens de rotation opposé au premier sens de rotation, et

(b) le passage du sens de rotation du servomoteur (138) du premier au second sens de rotation peut être commandé lorsque les moyens de contrôle (70) se déclenchent.

**6.** Appareil selon l'une quelconque des revendications 2 à 5, **caractérisé en ce que**

(a) un élément de robinetterie (72) de l'appareil présente un corps en canal (76) en forme de Y muni de trois embouts de raccordement (78,80,82) qui forment à chaque fois deux canaux (84,86;88,90;92,94) coaxiaux l'un par rapport à l'autre,

(b) un premier embout de raccordement (98) pour le raccordement à un embout de raccordement en T (102) pourvu de canaux coaxiaux de façon correspondante d'une pièce en T (96), pouvant être implantée à l'intérieur d'une conduite d'eau, est prévu, le canal intérieur de l'embout de raccordement en T (102) étant relié au premier raccord en T (98) et le canal extérieur de l'embout de raccordement en T (102) étant relié à l'autre embout en T (100),

(c) le canal extérieur (90) d'un deuxième embout de raccordement (80) du corps en canal (76) étant relié à une admission (106) de la chambre de traitement (74) et

(d) le canal intérieur (92) d'un troisième embout de raccordement (82) du corps en canal (76) étant relié à une sortie (108) de la chambre de traitement (74) et

(e) le canal intérieur (92) du deuxième embout de raccordement (80) étant relié au canal intérieur (84) du premier embout de raccordement (78) et

(f) le canal extérieur (94) du troisième embout de raccordement (82) étant relié au canal extérieur (86) du premier embout de raccordement (78).

7. Appareil selon la revendication 6, **caractérisé en ce que** la vanne d'arrêt (140) maîtrise le canal intérieur (88) du deuxième embout de raccordement (80) du corps en canal (76).

8. Appareil selon la revendication 7, **caractérisé en ce que** la vanne d'arrêt (140) est une vanne à bille.

9. Appareil selon l'une quelconque des revendications 2 à 8, **caractérisé en ce que**

(a) un débitmètre (114) qui fournit une valeur de mesure du débit pour le courant d'eau traversant l'appareil est disposé sur le trajet du courant,

(b) la valeur de mesure du débit du débitmètre (114) est appliquée, d'une part, au dispositif de contrôle (70) afin de vérifier si l'un des critères de sécurité qui assurent le déclenchement du dispositif de contrôle (70) pour la fermeture de la vanne d'arrêt (140) est satisfait, et

(c) d'autre part, des moyens de commutation peuvent être commandés par la valeur de mesure du débit du même débitmètre (114), moyens de commutation permettant d'appliquer une tension entre les anodes (118) et les cathodes (120) situées dans la chambre de traitement (74) uniquement en cas de passage de l'eau.

10. Appareil selon la revendication 9, **caractérisé en ce que** le nombre de tours du servomoteur (138) peut être modifié, en fonctionnement normal, en fonction de la valeur de mesure du débit de sorte qu'en cas d'augmentation du débit d'eau, la vitesse des moyens pour le détachement (124) est augmentée.

**Fig. 1**

Fig. 2

70

72

74

Fig. 3

Fig.4

Fig.5

Schnitt C-C

74

106

108

Fig. 6

Schnitt D-D

104

114

Fig.7

Ausschnitt X

Fig.8

Fig.9